# EUROPÄISCHE PATENTSCHRIFT

(11) **EP 4 344 529 B1**
(45) Veröffentlichungstag und Bekanntmachung des Hinweises auf die Patenterteilung: **19.02.2025**
(21) Anmeldenummer: 23196004.8
(22) Anmeldetag: 07.09.2023
(51) Int. Cl.: A01D 34/835, A01D 43/08, A01D 45/02

(54) **ERNTEMASCHINE MIT EINEM ERNTEGERÄT UND VERFAHREN ZUM BETREIBEN DER ERNTEMASCHINE**
HARVESTING MACHINE WITH A HARVESTING DEVICE AND METHOD FOR OPERATING THE HARVESTING MACHINE
RÉCOLTEUSE DOTÉE D'UN APPAREIL DE RÉCOLTE ET PROCÉDÉ DE FONCTIONNEMENT DE LA RÉCOLTEUSE

(30) Priorität: 30.09.2022 DE 102022125382
(43) Veröffentlichungstag der Anmeldung: 03.04.2024
(60) Teilanmeldung: 24202939.5
(73) Patentinhaber: Maschinenfabrik Bernard Krone GmbH & Co. KG, 48480 Spelle (DE)
(72) Erfinder: Ahlmer, Frank, 49492 Westerkappeln (DE); Ester, Markus, 49832 Beesten (DE); Bolsmann, Martin, 49832 Andervenne (DE); Focks, Tobias, 48480 Spelle (DE); Lütke Lengerich, Steffen, 48341 Altenberge (DE)

(56) Entgegenhaltungen:
- EP-A1- 3 272 199
- EP-A1- 3 391 724
- EP-A1- 3 881 665
- DE-A1- 102021 114 960
- DE-A1- 102021 120 012

## Beschreibung

Die vorliegende Erfindung betrifft eine Erntemaschine mit einem Erntegerät, an dem wenigstens eine Mulcheinheit angeordnet ist, wobei
- das Erntegerät eine Schneid- und/oder Fördereinrichtung zum Ernten von stängelartigem Erntegut aufweist, und
- die Mulcheinheit ein um eine Antriebsachse rotierend antreibbares Bearbeitungswerkzeug zum Bearbeiten von bei der Ernte in einem Feldboden verbleibenden Pflanzenstängeln aufweist, der Schneid- und/oder Fördereinrichtung in einer Gutflussrichtung nachgeordnet ist, sich in einem Feldbetrieb in einer Arbeitsstellung auf dem Feldboden abstützt, und um eine Schwenkachse an einem Rahmen des Erntegerätes relativ zu diesem schwenkbar gelagert ist,
wobei die Erntemaschine eine Steuerungseinheit und wenigstens einen Sensor umfasst. Die vorliegende Erfindung betrifft weiterhin ein Erntegerät und eine Mulcheinheit für die Erntemaschine sowie ein Verfahren zum Betreiben einer solchen Erntemaschine.

Bei der Ernte von stängeligem Erntegut wie beispielsweise Mais oder Sonnenblumen werden oftmals Mulchgeräte eingesetzt, um die im Boden verbleibenden Pflanzenstängel zu zerkleinern. Das Zerkleinern fördert die Verrottung. Weiterhin lassen sich die zerkleinerten Pflanzenstängel bei einer anschließenden Bodenbearbeitung besser einmischen. Zudem kann so einem Schädlingsbefall, beispielsweise durch Maiszünsler, vorgebeugt werden.

Solche Mulchgeräte sind regelmäßig an einem Erntegerät, insbesondere einem Erntevorsatzgerät, angeordnet und einem zum Ernten des Erntegutes vorgesehenen Schneidwerkzeug des Erntegerätes in einer Gutflussrichtung nachgeordnet. Sie sind bodennah angeordnet und kommen daher immer wieder mit Hindernissen wie beispielsweise Steinen oder Bodenunebenheiten in Kontakt. Durch das Auftreffen auf solche Hindernisse werden nicht nur jeweils das Bearbeitungswerkzeug der Mulchgeräte, sondern auch ihr Antriebsstrang, insbesondere Getriebe und/oder Kupplungen des Antriebsstrangs, belastet, so dass Beschädigungen auftreten können oder zumindest Verschleiß auftritt.

Um bei einem ungünstigen Auftreffen eines Bearbeitungswerkzeugs eines Mulchgerätes auf ein Hindernis wie einen Stein erhebliche Beschädigungen im Antriebsstrang des Mulchgerätes zu verhindern, offenbart die Druckschrift EP 3 881 665 A1 eine Überlastsicherung für ein Mulchgerät, bei dem ein Verbindungsmittel vorgesehen ist, mit dem das Bearbeitungswerkzeug am Mulchgerät befestigt ist. Bei Auftreten einer Überlast ist vorgesehen, dass das Verbindungsmittel reißt. Durch diesen Sollbruch werden zwar die Komponenten des Antriebsstrangs des Mulchgerätes nicht beschädigt, jedoch ist zur Weiterfahrt auf dem Feld eine Reparatur des Mulchgerätes erforderlich. Zudem wird das Werkzeug sowie sein Antriebsstrang bis zum Sollbruch des Verbindungsmittels belastet, so dass dennoch Verschleiß am Werkzeug und am Antriebsstrang auftritt.

Solche Hindernisse treten im Vorgewende vermehrt auf. Zudem kann ein Mulchgerät aufgrund seiner bodennahen Anordnung bei Rückwärtsfahrt in den Feldboden eindringen.

Die Druckschrift EP 3 391 724 B1 offenbart eine selbstfahrende Erntemaschine mit einem Erntevorsatzgerät, an dem ein Mulchgerät angeordnet ist. Die Erntemaschine weist einen Geschwindigkeitssensor zur Erfassung der Vortriebsgeschwindigkeit auf. Sie ist dazu eingerichtet, das Mulchgerät in eine Außerbetriebsposition zu verbringen, wenn die Vortriebsgeschwindigkeit eine Mindestvortriebsgeschwindigkeit unterschreitet oder wenn die Erntemaschine rückwärtsfährt. Dadurch verhakt sich das Mulchgerät weniger häufig im Feldboden.

Die Druckschrift DE 10 2021 114 960 A1 offenbart einen Erntevorsatz zum Ernten von stängelartigen Pflanzen mit einem Mulchgerät, welches eine durch einen Antrieb rotativ antreibbare Welle aufweist, wobei eine Steuereinrichtung konfiguriert ist, anhand ihr zugeführter Signale hinsichtlich der Vortriebsgeschwindigkeit des Erntevorsatzes und/oder der Neigung der Welle gegenüber der Vertikalen die Drehzahl des Antiriebs zu verändern.

Aufgabe der vorliegenden Erfindung ist es, eine Erntemaschine mit einem Erntegerät, an dem eine Mulcheinheit angeordnet ist, zu schaffen, bei dem ein Verschleiß an der Mulcheinheit, dem Antriebsstrang der Mulcheinheit und/oder dem Erntegerät verringert und/oder eine Standzeit der Mulcheinheit, des Antriebsstrangs und/oder des Erntegerätes erhöht ist, und die für den Fahrer leicht handhabbar ist, wobei die Mulcheinheit kostengünstig herstellbar und/oder betreibbar ist.

Die Aufgabe wird gelöst mit einer Erntemaschine mit den Merkmalen des unabhängigen Patentanspruchs 1 sowie einem Verfahren mit den Merkmalen des unabhängigen Patentanspruchs 16. Vorteilhafte Ausführungsformen sind den abhängigen Ansprüchen entnehmbar.

Dafür wird eine Erntemaschine mit einem Erntegerät geschaffen, wobei am Erntegerät wenigstens eine Mulcheinheit angeordnet ist, wobei
- das Erntegerät eine Schneid- und/oder Fördereinrichtung zum Ernten von stängelartigem Erntegut aufweist, und
- die Mulcheinheit ein um eine Antriebsachse rotierend antreibbares Bearbeitungswerkzeug zum Bearbeiten von bei der Ernte in einem Feldboden verbleibenden Pflanzenstängeln aufweist, der Schneid- und/oder Fördereinrichtung in einer Gutflussrichtung nachgeordnet ist, sich in einem Feldbetrieb in einer Arbeitsstellung auf dem Feldboden abstützt, und um eine Schwenkachse an einem Rahmen des Erntegerätes relativ zu diesem schwenkbar gelagert ist,
wobei die Erntemaschine eine Steuerungseinheit und wenigstens einen Sensor umfasst.

Die Erntemaschine zeichnet sich dadurch aus, dass der Sensor zur Erfassung einer auf das Bearbeitungswerkzeug wirkenden Überlast vorgesehen ist, und die Steuerungseinheit dazu eingerichtet ist, die Mulcheinheit bei Erfassen der Überlast relativ zur Arbeitsstellung in eine angehobene Stellung zu verschwenken.

Durch das Anheben der Mulcheinheit bei Erfassung der Überlast kann das Bearbeitungswerkzeug der Mulcheinheit bei Kontakt mit einem Hindernis, wie beispielsweise einem Stein oder einer Bodenunebenheit, über das Hindernis hinweggehoben werden. Dadurch wird es automatisch aus dem Blockadebereich gehoben. Da die Mulcheinheit automatisch aus dem Blockadebereich gehoben wird, wird die Überlast sehr schnell behoben und das Erntegerät nur sehr kurzzeitig belastet. Außerdem muss der Fahrer dabei nicht eingreifen, kann seine Aufmerksamkeit auf den weiteren Erntevorgang richten und wird durch die Beobachtung der Mulcheinheit nicht beansprucht oder abgelenkt.

Sofern das Bearbeitungswerkzeug bereits in den Feldboden eingedrungen ist, wird es sehr schnell aus diesem herausgehoben. Dadurch tritt am Bearbeitungswerkzeug nur sehr kurzzeitig Verschleiß auf, der Verschleiß ist somit gering, und die Standzeit des Bearbeitungswerkzeugs hoch. Außerdem tritt durch die Überlast kein Wartungsaufwand auf dem Feld auf, da die Mulcheinheit nach Auftreten der Überlast weiter betrieben werden kann.

Das Erntegerät ist in einer bevorzugten Ausführungsform ein Erntevorsatzgerät für eine, insbesondere selbstfahrende, Erntemaschine. Als solches ist es vorzugsweise frontseitig der Erntemaschine angeordnet. Die Mulcheinheit ist aber auch für andere Erntegeräte verwendbar, die beispielsweise an einen Schlepper anhängbar oder heckseitig anbaubar sind.

In einer bevorzugten Ausführungsform ist der Sensor zur Erfassung der Überlast vorgesehen, und als Drehzahlsensor oder als Drehmomentsensor ausgebildet, der an der Mulcheinheit angeordnet ist. Die Überlast kann dann unmittelbar an der Mulcheinheit, insbesondere am oder nahe dem Bearbeitungswerkzeug, erfasst werden. Aufgrund der Vielzahl eingesetzter Drehzahlsensoren und Drehmomentsensoren in technischen Vorrichtungen sind solche Sensoren sehr kostengünstig erhältlich und die Erfassung der Überlast in der Mulcheinheit ist daher sehr kostengünstig realisierbar.

Dabei ist es bevorzugt, dass die Mulcheinheit ein Getriebe umfasst, das eingangsseitig an einen Antriebsstrang des Erntegerätes und/oder der Erntemaschine angeschlossen ist, und das einen werkzeugseitigen Abtrieb zum Antrieb des Bearbeitungswerkzeugs umfasst, wobei der Sensor im Getriebe angeordnet ist. Durch die Anordnung des Sensors im Getriebe ist der Sensor nahe dem Bearbeitungswerkzeug angeordnet. In einer bevorzugten Ausführungsform wird als Sensor ein ohnehin für die Erfassung der Antriebsdrehzahl des Getriebes oder der Mulcheinheit vorgesehener Sensor genutzt. Dadurch fallen keine Kosten für einen zusätzlichen Sensor an.

Dabei ist es weiterhin bevorzugt, dass der Sensor zum Erfassen der Überlast
- am werkzeugseitigen Abtrieb des Getriebes eine Drehzahl des Bearbeitungswerkzeugs erfasst, oder
- als Drehmomentmessnabe ausgebildet ist und antriebsseitig des Getriebes oder am werkzeugseitigen Abtrieb des Getriebes ein Drehmoment erfasst.

Durch die Anordnung des Sensors am werkzeugseitigen Abtrieb des Getriebes wird des Bearbeitungswerkzeugs werkzeugnah überwacht. Dadurch ist die Erfassung sehr genau. Alternativ oder zusätzlich ist es bevorzugt, die Eingangsdrehzahl oder das Eingangsdrehmoment des Getriebes zu erfassen.

Vorzugsweise weist die Erntemaschine eine Vielzahl Mulcheinheiten auf, wobei für jede der Mulcheinheiten jeweils ein Getriebe vorgesehen ist, wobei jede der Mulcheinheiten einen Sensor zum Erfassen der Überlast umfasst. Dadurch kann in jeder Mulcheinheit jeweils eine auftretende Überlast separat erfasst werden.

In einer bevorzugten Ausführungsform sind die Getriebe von zwei oder mehr der Mulcheinheiten mittels Gelenkwellen miteinander verbunden. Dadurch sind sie in einer Reihe hintereinander angeordnet. Dafür weisen die Getriebe der Mulcheinheiten bevorzugt jeweils einen Abtrieb zum Antrieb eines benachbarten Getriebes einer benachbarten Mulcheinheit auf. In einer besonders bevorzugten Ausführungsform sind die Getriebe jeweils als T- Getriebe ausgebildet. Dafür weisen sie bevorzugt jeweils eine sie durchsetzende, einenends antreibbare Getriebewelle auf, die anderenends zum Antrieb des benachbarten Getriebes genutzt wird. Die Getriebewelle ist an ihren Enden bevorzugt jeweils mittels eines Kardangelenks an die Gelenkwellen angebunden, um einen räumlichen Versatz zwischen den Getrieben zu ermöglichen. Dadurch kann eine Mulcheinheit relativ zu ihrer benachbarten Mulcheinheit oder ihren benachbarten Mulcheinheiten räumlich versetzt angeordnet werden, insbesondere höhenversetzt. Die Gelenkwellen ermöglichen daher, dass jede der Mulcheinheiten jeweils unabhängig von einer benachbarten Mulcheinheit anhebbar und/oder absenkbar ist.

Das Erntegerät kann zum Antrieb der Mulcheinheiten einen oder mehrere Antriebsstränge aufweisen. In einer bevorzugten Ausführungsform bilden jeweils mindestens zwei Mulcheinheiten, die an denselben Antriebsstrang angeschlossen und miteinander verbunden sind, eine Gruppe. Durch eine solche Gruppierung der Mulcheinheiten können die Mulcheinheiten derselben Gruppe, insbesondere in Bezug auf das Drehmoment und/oder die Drehzahl ihrer Bearbeitungswerkzeuge, gemeinsam überwacht werden. Da die Mulcheinheiten der Gruppe trieblich miteinander verbunden sind, kann selbst bei einem Ausfall des Sensors einer der Mulcheinheiten eine Überlasterkennung durch die trieblich verbundenen weiteren, insbesondere benachbarten, Mulcheinheiten erfolgen. Dadurch ist quasi eine redundante Überlasterkennung möglich. Anhand einer solchen Überwachung kann auch ein Ausfall oder eine Fehlfunktion einer Mulcheinheit der Gruppe oder eines der Sensoren der Mulcheinheiten erfasst werden.

Bei Auftreten der Überlast an einer oder an mehreren Mulcheinheiten können die Mulcheinheiten, insbesondere in Abhängigkeit von der zur Verfügung stehenden hydraulischen Leistung, separat, oder können die Mulcheinheiten einer Gruppe gemeinsam von der Arbeitsstellung in die angehobene Stellung angehoben werden.

Alternativ kann für die Überwachung der Überlast der Mulcheinheiten einer solchen Gruppe nur ein Sensor vorgesehen sein, wobei die Mulcheinheiten bei Auftreten der Überlast gemeinsam von der Arbeitsstellung in die angehobene Stellung verschwenkt werden.

Das Erntegerät der Erntemaschine umfasst bevorzugt wenigstens zwei Abschnitte, wobei jedem der Abschnitte mindestens zwei Mulcheinheiten, vorzugsweise mehr, insbesondere derselben Gruppe, zugeordnet sind. Vorzugsweise sind die Mulcheinheiten der Abschnitte jeweils über eine Breite der Abschnitte gleichmäßig verteilt angeordnet. Die Abschnitte des Erntegerätes können zueinander verstellbar vorgesehen sein, so dass sie beispielsweise durch eine Verstellmechanik reversibel von einer Arbeitsposition in eine Transportposition verbringbar sind. In dieser Ausführungsform ist es besonders bevorzugt, dass für jeden der Abschnitte des Erntegerätes jeweils wenigstens ein Antriebsstrang zum Antrieb der Mulcheinheiten vorgesehen ist. Besonders bevorzugt bilden die Mulcheinheiten jedes Abschnitts außerdem eine Gruppe. Das Erntegerät weist zudem vorzugsweise ein Hauptgetriebe auf, das die Antriebsstränge leistungsempfangend mit einer Zapfwelle der Erntemaschine verbindet.

Dabei ist es bevorzugt, dass die Steuerungseinheit dazu eingerichtet ist, bei Auftreten der Überlast an einer Mulcheinheit diese Mulcheinheit separat oder gemeinsam die Mulcheinheiten des Abschnittes, in dem sie angeordnet ist, oder gemeinsam die Mulcheinheiten der Gruppe, zu der sie gehört, von der Arbeitsstellung in die angehobene Stellung zu verschwenken.

In einer weiteren bevorzugten Ausführungsform weist das Getriebe eine Überlastkupplung auf, die dazu eingerichtet ist, den werkzeugseitigen Abtrieb des Getriebes vom übrigen Antriebsstrang trieblich zu trennen. Dadurch wird das Bearbeitungswerkzeug bei Auftreten der Überlast an der Überlastkupplung trieblich auch von allen anderen Antriebssträngen des Erntegerätes und/oder der Erntemaschine getrennt. Die Überlastkupplung dient daher nicht nur dem Schutz der überlasteten Mulcheinheit. Sondern gleichzeitig werden auch alle anderen trieblich mit ihr verbundenen Antriebsstränge und/oder Getriebe des Erntegerätes und/oder der Erntemaschine durch sie geschützt. Dadurch treten am Bearbeitungswerkzeug der Mulcheinheit und/oder am Erntegerät im Vergleich zu herkömmlichen Mulcheinheiten weniger häufig Beschädigungen auf. Dabei tritt durch die Überlast Verschleiß an der Überlastkupplung auf. Die Überlastkupplung kann aber so ausgelegt sein, dass der Verschleiß durch Anheben der Mulcheinheit nur sehr gering ist.

Bei Nutzung einer drehmomenterhaltenden Überlastkupplung kann der Anlauf des Bearbeitungswerkzeugs nach Überwinden der Überlast oder Blockade automatisch erfolgen. Auch dadurch wird der Fahrer bei einer an einer der Mulcheinheiten auftretenden Überlast nicht durch diese belastet.

Eine zuverlässige Erfassung der Überlast kann anhand einer Vielzahl von Berechnungen erfolgen. Vorzugsweise wird die Überlast anhand eines Schwellwertvergleiches erfasst. Die Steuerungseinheit ist bevorzugt dazu eingerichtet, die Überlast zu erfassen, wenn
a) die aktuell erfasste Drehzahl des Bearbeitungswerkzeugs, oder
b) eine Drehzahldifferenz zwischen einer höchsten der aktuell erfassten Drehzahlen von mindestens zwei Mulcheinheiten, insbesondere derselben Gruppe, und einer niedrigsten der aktuell erfassten Drehzahlen der mindestens zwei Mulcheinheiten, einen Schwellwert unterschreitet, und/oder wenn
c) das aktuell erfasste Drehmoment des Bearbeitungswerkzeugs, oder
d) eine Drehmomentdifferenz zwischen einem höchsten der aktuell erfassten Drehmomente von mindestens zwei Mulcheinheiten, insbesondere derselben Gruppe, und einem niedrigsten der aktuell erfassten Drehmomente der mindestens zwei Mulcheinheiten,
   einen Schwellwert überschreitet, und/oder wenn
e) eine Differenz aus einer Antriebsdrehzahl des Erntegerätes oder der Erntemaschine und der aktuell erfassten Drehzahl des Bearbeitungswerkzeugs einen Schwellwert unterschreitet, oder
f) eine Differenz aus einem Antriebsdrehmoment des Erntegerätes oder der Erntemaschine und dem Drehmoment des Bearbeitungswerkzeugs einen Schwellwert überschreitet.

Für die Berechnung kann der Schwellwert als nominaler Wert oder als Prozentwert vorliegen.

Alternativ oder zusätzlich kann die Steuerungseinheit auch dazu eingerichtet sein, die Überlast zu erfassen, wenn
g) eine Durchschnittsdrehzahl aus den aktuell erfassten Drehzahlen von mindestens zwei Mulcheinheiten, insbesondere derselben Gruppe, oder
h) eine Durchschnittsdrehzahl oder eine Drehzahldifferenz aus mindestens zwei zeitlich aufeinanderfolgenden Drehzahlen derselben Mulcheinheit, oder
i) eine Durchschnittsdrehzahl aus jeweils mindestens zwei zeitlich aufeinanderfolgenden Drehzahlen von mindestens zwei Mulcheinheiten, insbesondere derselben Gruppe,
   den Schwellwert unterschreitet, oder
j) ein Durchschnittsdrehmoment aus den aktuell erfassten Drehmomenten von mindestens zwei Mulcheinheiten, insbesondere derselben Gruppe, oder
k) ein Durchschnittsdrehmoment oder eine Drehmomentdifferenz aus mindestens zwei zeitlich aufeinanderfolgenden Drehmomenten derselben Mulcheinheit, oder
l) ein Durchschnittsdrehmoment aus jeweils mindestens zwei zeitlich aufeinanderfolgenden Drehmomenten von mindestens zwei Mulcheinheiten, insbesondere derselben Gruppe,
den Schwellwert überschreitet. Es sind noch eine Vielzahl anderer Berechnungsmethoden möglich.

Die Erntemaschine weist weiterhin bevorzugt einen Festwertspeicher auf, in dem der Schwellwert hinterlegt ist. In einer bevorzugten Ausführungsform ist der Schwellwert, insbesondere durch den Fahrer der Erntemaschine oder einen Monteur, insbesondere an einer Bedienerkonsole, einstellbar vorgesehen. Die Steuerungseinheit kann zudem zur Erfassung der Hindernisse und zum Ablegen dieser Daten im Festwertspeicher eingerichtet sein. Dabei werden bevorzugt zumindest der Typ des Hindernisses, insbesondere Stein oder Bodenunebenheit, und seine Position erfasst.

Zusätzlich ist es bevorzugt, dass ein Sensor zur Erfassung eines Gutflusses in der Erntemaschine vorgesehen ist, und die Steuerungseinheit dazu eingerichtet ist, die Mulcheinheit bei verringertem oder ausbleibendem Gutfluss relativ zur Arbeitsstellung in die angehobene Stellung zu verschwenken.

Durch die Erfassung eines sich verringernden oder ausbleibenden Gutflusses wird erreicht, dass die Mulcheinheit im Feldbetrieb nur so lange in die Arbeitsstellung verschwenkt ist, wie Erntegut geerntet wird. Wenn kein Erntegut geerntet wird, wird die Mulcheinheit relativ zur Arbeitsstellung in die angehobene Stellung verschwenkt, beispielsweise bei Stillstand der Erntemaschine oder bei Wendemanövern, insbesondere im Vorgewende und/oder bei Rückwärtsfahrt. Da die Mulcheinheit bei sich verringernden oder ausbleibenden Gutfluss von der Arbeitsstellung in die angehobene Stellung verschwenkt ist, wird ein unnötiger Betrieb der Mulcheinheit vermieden, so dass erst gar keine Überlast am Bearbeitungswerkzeug auftreten kann. Dabei kann weiterhin vorgesehen sein, dass das Bearbeitungswerkzeug in der angehobenen Stellung der Mulcheinheit nicht betrieben wird. Dadurch ist der Leistungsbedarf der Erntemaschine verringert.

Da im Vorgewende und/oder bei Rückwärtsfahrt vermehrt mit einem Auftreffen des Bearbeitungswerkzeugs auf ein Hindernis wie beispielsweise auf einen Stein oder eine Bodenunebenheit zu rechnen ist, führt auch das Anheben in Abhängigkeit vom Gutfluss zu einem verringerten Verschleiß und einer erhöhten Standzeit des Bearbeitungswerkzeugs und/oder des Antriebsstrangs. Durch die verlängerte Standzeit sind zudem wenigstens langfristig oder sogar mittelfristig die (Wartungs-) Kosten für die Mulcheinheit verringert.

Dabei wird besonders bevorzugt ein bereits in der Erntemaschine oder dem Erntegerät vorhandener Gutflusssensor genutzt. Um die Verringerung und/oder das Ausbleiben des Gutflusses schnellstmöglich zu erfassen, ist es bevorzugt, dass der Sensor in Gutflussrichtung eingangsseitig des Erntegerätes oder der Erntemaschine angeordnet ist. Bevorzugt ist der Sensor im Erntegerät angeordnet. Er kann beispielsweise als NIR- Sensor (Nahinfrarot- Sensor) oder als optoelektrischer Sensor ausgebildet sein. Ebenfalls bevorzugt ist der Sensor in einer Einzugsanordnung der Erntemaschine angeordnet. In dieser Ausführungsform kann er beispielsweise zur Messung einer Auslenkung einer Einzugswalze vorgesehen sein. Weiterhin bevorzugt ist der Sensor in einem Auswurfbogen der Erntemaschine angeordnet. Dabei ist er beispielsweise als NIR- Sensor ausgebildet.

In einer bevorzugten Ausführungsform ist die Steuerungseinheit dazu eingerichtet, die Mulcheinheit beim Schwenken in die angehobene Stellung in eine in Abhängigkeit von einem Betrag der Überlast und/oder einem betriebsrelevanten Parameter bestimmte Höhe über dem Feldboden, oder in eine voreingestellte Höhe über dem Feldboden anzuheben. Die voreingestellte Höhe kann beispielsweise eine aus Erfahrungswerten bestimmte Höhe über dem Feldboden, oder eine in Abhängigkeit von der Erntehöhe des Erntegerätes bestimmte Höhe über dem Feldboden sein. Dabei ist die Höhe über dem Feldboden beispielsweise durch einen Drehwinkel der Mulcheinheit um ihre Schwenkachse bestimmbar. Vorzugsweise wird sie mittels eines Drehwinkelsensors an einem Schwenklager der Mulcheinheit, an dem diese am Erntegerät gelagert ist, erfasst. Die voreingestellte Höhe ist bevorzugt im Festwertspeicher hinterlegt und weiterhin bevorzugt durch den Fahrer der Erntemaschine oder einen Monteur, insbesondere an der Bedienerkonsole, einstellbar vorgesehen.

Alternativ kann die Höhe der Mulcheinheit in der angehobenen Stellung in Abhängigkeit von einem Betrag der Überlast und/oder einem betriebsrelevanten Parameter einstellbar sein. In dieser Ausführungsform ist die Steuerungseinheit dazu vorgesehen, sie bei Auftreten der Überlast zu berechnen. Betriebsrelevante Parameter sind beispielsweise Witterungsparameter, Erntegutparameter, Maschinenparameter und/oder sonstige Parameter. Witterungsparameter umfassen beispielsweise Temperatur, Niederschlag, Bodenfeuchte und/oder Luftfeuchte, Erntegutparameter die Erntegutart, Erntegutfluss und/oder Erntegutfeuchte, und Maschinenparameter einen Betriebszustand, eine Drehzahl, einen Leistungsverbrauch oder dergleichen.

Indem die Höhe der Mulcheinheit in der angehobenen Stellung in Abhängigkeit von dem Betrag der Überlast und/oder dem betriebsrelevanten Parameter einstellbar ist, kann die eingestellte Höhe der Mulcheinheit beispielsweise bei einem niedrigen Betrag der Überlast niedriger als bei einem hohen Betrag der Überlast sein. Dadurch kann die Mulcheinheit nach Überwinden einer Überlast mit niedrigem Betrag im Vergleich zu einem Absenken aus größerer Höhe bei einer Überlast mit größerem Betrag schneller aus der angehobenen Stellung in die Arbeitsstellung zurück verschwenkt werden.

Weiterhin bevorzugt ist die Steuerungseinheit dazu eingerichtet, die Mulcheinheit zeitgesteuert und/oder weggesteuert aus der angehobenen Stellung in die Arbeitsstellung zurück zu verschwenken. Dadurch wird die Mulcheinheit bei Erfassen der Überlast für eine vorgegebene Zeit und/oder eine vorgegebene Strecke in der angehobenen Stellung gehalten. Nach Verstreichen der Zeit und/oder nach Abfahren der Strecke verschwenkt die Steuerungseinheit die Mulcheinheit zurück in die Arbeitsstellung. Zur Erfassung der Position der Überlast und/oder der abgefahrenen Strecke kann dabei ein, insbesondere satellitengestützter, Positionssensor verwendet werden. Durch Hinterlegen der Position des Hindernisses im Festwertspeicher und/oder an einem entfernten Ort kann zeitlich nachfolgend eine Auswertung der Hindernisse des bearbeiteten Feldes erfolgen. Eine später durchgeführte Bodenbearbeitung kann das Hindernis bereits vorausschauend berücksichtigen oder der Feldboden kann zu einem späteren Zeitpunkt gezielt nachbearbeitet werden. Zur Erfassung der Hindernisse und zum Ablegen dieser Daten an dem entfernten Ort weist die Erntemaschine bevorzugt eine Sendeund/oder Empfangseinheit auf, mit der diese an den entfernten Ort, insbesondere eine entfernte Recheneinheit, übermittelt werden, um zu einem späteren Zeitpunkt abgefragt und/oder verarbeitet zu werden.

Weiterhin ist es bevorzugt, dass das Erntegerät einen Aktor aufweist, der dazu vorgesehen ist, die Mulcheinheit von der Arbeitsstellung in die angehobene Stellung und zurück zu verschwenken. Der Aktor kann dabei vorteilhaft als einfachwirkender Zylinder ausgeführt sein. In dieser Ausführungsform ist er kostengünstig beschaffbar. Die Mulcheinheit ist bevorzugt vom Zylinder anhebbar, indem dieser mit Druck beaufschlagt wird. Durch Wegnahme des Drucks des Zylinders ist die angehobene Mulcheinheit dieser Ausführungsform wieder absenkbar. Vorteilhaft ist bei fehlendem Druck im Zylinder eine Bodenführung der Mulcheinheit möglich, indem diese frei pendelnd an der Schwenkachse angelenkt ist.

Die Aufgabe wird weiterhin gelöst mit einem Erntegerät für eine solche Erntemaschine. Das Erntegerät weist eine Schneid- und/oder Fördereinrichtung zum Ernten von Erntegut auf. Es weist wenigstens einen Antriebsstrang zum Anschließen zumindest einer Mulcheinheit, vorzugsweise mehrerer Mulcheinheiten, auf. Der Antriebsstrang ist bevorzugt an ein Hauptgetriebe des Erntegerätes angeschlossen. Dadurch ist die zumindest eine Mulcheinheit leistungsempfangend an das Hauptgetriebe des Erntegerätes anschließbar. Weiterhin bevorzugt weist das Erntegerät einen Rahmen auf, an den die Mulcheinheit befestigbar ist, insbesondere einen (Quer-) Träger.

Die zumindest eine Mulcheinheit ist bevorzugt lösbar am Erntegerät angeordnet. Dadurch ist sie nachrüstbar und/oder, beispielsweise zu Wartungszwecken, vom Erntegerät abbaubar.

Die Aufgabe wird weiterhin gelöst mit einer Mulcheinheit für ein solches Erntegerät. Die Mulcheinheit weist ein Bearbeitungswerkzeug zum Bearbeiten von bei der Ernte im Feldboden verbleibenden Pflanzenstängeln auf. Weiterhin weist sie einen Sensor auf, der dazu vorgesehen ist, eine Überlast am Bearbeitungswerkzeug zu erfassen. Vorzugsweise ist der Sensor in einem Getriebe der Mulcheinheit angeordnet. Er kann beispielsweise als Drehzahlsensor oder als Drehmomentsensor ausgebildet sein.

Das Getriebe ist bevorzugt leistungsempfangend an einen Antriebsstrang des Erntegerätes anschließbar. Weiterhin bevorzugt weist die Mulcheinheit Anbaumittel, insbesondere eine Konsole, auf, mit der sie an einen Rahmen, insbesondere an einen (Quer-) Träger des Rahmens, des Erntegerätes anbaubar ist. Alternativ kann das Anbaumittel, insbesondere die Konsole, auch am Rahmen des Erntegerätes angeordnet sein.

Die Mulcheinheit weist weiterhin bevorzugt einen Aktor auf, mit dem die Mulcheinheit bei Auftreten einer Überlast und/oder sich verringerndem oder ausbleibendem Gutfluss von einer Arbeitsstellung in eine angehobene Stellung anhebbar ist. Dabei ist es bevorzugt, dass sich der Aktor zwischen dem Anbaumittel, insbesondere der Konsole, und einem Mulcherrahmen der Mulcheinheit erstreckt.

Die Aufgabe wird weiterhin gelöst mit einem Verfahren zum Betreiben einer solchen Erntemaschine, bei dem
- wenigstens eine Drehzahl und/oder wenigstens ein Drehmoment eines Bearbeitungswerkzeugs einer Mulcheinheit der Erntemaschine gemessen wird,
und eine am Bearbeitungswerkzeug auftretende Überlast, insbesondere durch einen Schwellwertvergleich, erfasst wird, und bei dem das Bearbeitungswerkzeug bei Auftreten der Überlast von der Arbeitsstellung in eine angehobene Stellung verschwenkt wird.

Eine Überlastung des Bearbeitungswerkzeugs kann auftreten, wenn dieses in den Feldboden eindringt oder auf ein Hindernis wie beispielsweise einen Stein trifft. Durch das Verfahren wird die von der Überlast betroffene Mulcheinheit aus dem Feldboden angehoben oder über das die Überlast verursachende Hindernis hinweggehoben. Eine Belastung des Bearbeitungswerkzeugs und ihrer Antriebskomponenten findet nur sehr kurzzeitig statt. Der dabei auftretende Verschleiß ist daher nur gering. Das Verfahren ermöglicht durch Anheben der Mulcheinheit somit, die Überlastung sehr schnell zu verringern oder zu beenden. Die Standzeit des Bearbeitungswerkzeugs und/oder der Mulcheinheit ist daher gegenüber herkömmlichen Mulcheinheiten verlängert.

In einer bevorzugten Ausführungsform kann das Verfahren weiterhin vorsehen, dass ein Gutfluss in der Erntemaschine gemessen wird, und ein verringerter oder ausbleibender Gutfluss, insbesondere durch einen Schwellwertvergleich, erfasst wird, und bei dem das Bearbeitungswerkzeug bei sich verringerndem oder ausbleibendem Gutfluss von der Arbeitsstellung in eine angehobene Stellung verschwenkt wird.

Durch die Erfassung des sich verringernden oder ausbleibenden Gutflusses ist die Mulcheinheit im Feldbetrieb nur so lange in die Arbeitsstellung verschwenkt, solange Erntegut geerntet wird. Da die Mulcheinheit bei sich verringernden oder ausbleibenden Gutfluss von der Arbeitsstellung in die angehobene Stellung verschwenkt wird, wird ein unnötiger Betrieb der Mulcheinheit vermieden. Da im Vorgewende und/oder bei Rückwärtsfahrt vermehrt Hindernisse auftreten und/oder das Bearbeitungswerkzeug in den Boden eindringen kann, führt auch das Anheben der Mulcheinheit in Abhängigkeit vom Gutfluss zu einem verringerten Verschleiß und einer erhöhten Standzeit des Bearbeitungswerkzeugs und/oder des Antriebsstrangs.

Bevorzugt weist die Erntemaschine mindestens zwei Mulcheinheiten auf, wobei das Auftreten der Überlast weiterhin bevorzugt erfasst wird, wenn entweder eine Drehzahldifferenz zwischen einer höchsten der aktuell erfassten Drehzahlen der Mulcheinheiten und einer niedrigsten der aktuell erfassten Drehzahlen der Mulcheinheiten einen Schwellwert unterschreitet, und/oder eine Drehmomentdifferenz zwischen einem höchsten der aktuell erfassten Drehmomente der Mulcheinheiten und einem niedrigsten der aktuell erfassten Drehmomente der Mulcheinheiten einen Schwellwert überschreitet. Es sind noch eine Vielzahl weiterer Berechnungsmethoden zur Erfassung der Überlast möglich.

Insbesondere können bei der Erfassung der Überlast die Drehzahlen und/oder Drehmomente aller einander zugeordneten Mulcheinheiten berücksichtigt werden. Ein Zurückschwenken der Mulcheinheit oder der Mulcheinheiten kann zeitgesteuert und/oder weggesteuert erfolgen.

In einer bevorzugten Ausführungsform werden bei Auftreten der Überlast an einer Mulcheinheit diese Mulcheinheit oder die Mulcheinheiten des Abschnittes, in dem sie angeordnet ist, und/oder der Gruppe, der sie zugeordnet ist, von der Arbeitsstellung in die angehobene Stellung verschwenkt.

Die Aufgabe wird weiterhin gelöst mit einem Verfahren zum Betreiben einer solchen Erntemaschine mit einem Erntegerät, an dem wenigstens zwei oder mehr Mulcheinheiten angeordnet sind, die in einem Abschnitt des Erntegerätes angeordnet und/oder einer Gruppe von Mulcheinheiten zugeordnet sind, bei dem
- die Sensoren der Mulcheinheiten jeweils eine Drehzahl oder ein Drehmoment messen,
- das Auftreten einer Überlast, insbesondere mit einer der unter den Unterpunkten a) - m) vorgenannten Berechnungsmethoden, erfasst wird, insbesondere wenn entweder eine Drehzahldifferenz zwischen einer höchsten der aktuell erfassten Drehzahlen der Mulcheinheiten und einer niedrigsten der aktuell erfassten Drehzahlen der Mulcheinheiten einen Schwellwert unterschreitet, oder eine Drehmomentdifferenz zwischen einem höchsten der aktuell erfassten Drehmomente der Mulcheinheiten und einem niedrigsten der aktuell erfassten Drehmomente der Mulcheinheiten einen Schwellwert überschreitet, und
bei dem bei Auftreten der Überlast an einer Mulcheinheit der mehreren Mulcheinheiten diese eine Mulcheinheit oder die Mulcheinheiten des Abschnittes und/oder der Gruppe, dem oder der sie zugeordnet ist, von der Arbeitsstellung in die angehobene Stellung verschwenkt werden.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: schematisch ein Erntegerät für eine Erntemaschine gemäß der Erfindung in einer perspektivischen Ansicht;
- Fig. 2: schematisch in (a) und (b) jeweils einen Ausschnitt des Erntegerätes der Fig. 1 in verschiedenen perspektivischen Ansichten, und in (c) eine am Erntegerät angeordnete Mulcheinheit in einem Schnittbild; und
- Fig. 3: in (a) und (b) jeweils ein Schnittbild verschiedener Ausführungsformen eines Getriebes für die Mulcheinheit der Fig. 2 (c).

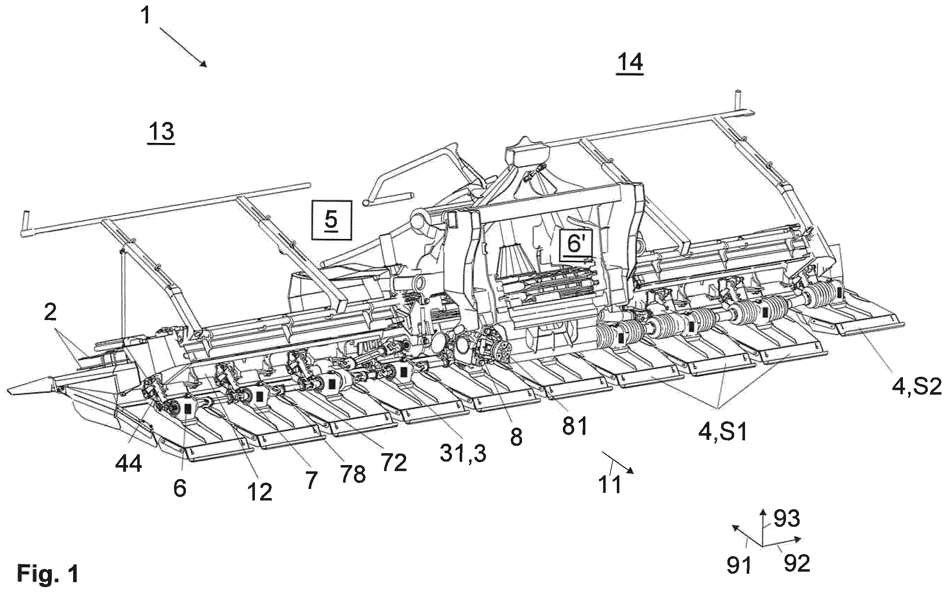

Fig. 1 zeigt eine Rückseite eines Erntegerätes 1 zum Ernten von Erntegut in einer perspektivischen Ansicht. Das Erntegerät 1 ist hier als Erntevorsatzgerät ausgebildet und in der Art eines Maisgebisses ausgeführt. Im Folgenden werden die Begriffe Erntegerät 1 und Erntevorsatzgerät synonym verwendet.

Das Erntevorsatzgerät 1 ist in an sich bekannter Weise frontseitig an eine Erntemaschine (nicht gezeigt), beispielsweise einen Feldhäcksler oder einen Mähdrescher, anbaubar und wird in einem Feldbetrieb über einen Feldboden (nicht gezeigt) geführt. Die Erntemaschine weist ein Hubwerk auf, das dazu eingerichtet ist, eine Höhe und/oder eine Neigung des Erntevorsatzgerätes 1 gegenüber dem Feldboden einzustellen. Das Erntevorsatzgerät 1 kann ferner einen oder mehrere Erfassungsmittel, beispielsweise Taster, zur Erfassung seiner Höhe und/oder Neigung gegenüber dem Feldboden aufweisen. Anhand der erfassten Höhe und/oder Neigung ist das Hubwerk der Erntemaschine ansteuerbar.

Weiterhin umfasst das Erntevorsatzgerät 1 mehrere Abschnitte 13, 14. Ein (in der Zeichenebene) linker Abschnitt 13 und ein (in der Zeichenebene) rechter Abschnitt 14 sind im Feldbetrieb in einer Feldstellung angeordnet, in der sie etwa waagrecht zum Feldboden ausgerichtet sind. Fig.1 zeigt das Erntevorsatzgerät 1 in der für den Feldbetrieb vorgesehenen Feldstellung. Um bei einem Straßentransport kompakte Ausmaße zu realisieren, ist das Erntevorsatzgerät 1 von der Feldstellung in eine Transportstellung (nicht gezeigt) überführbar. Dafür sind der linke Abschnitt 13 und der rechte Abschnitt 14 relativ zueinander und zu einem Rahmen (nicht gezeigt) des Erntevorsatzgerätes 1 verstellbar ausgebildet.

Im Feldbetrieb wird das Erntevorsatzgerät 1 in einer Fahrtrichtung 91 über den Feldboden geführt, wobei eine Schneid- und/oder Fördereinrichtung 2 halmartiges Erntegut schneidet und es einer Einzugsanordnung (nicht gezeigt) der Erntemaschine zufördert.

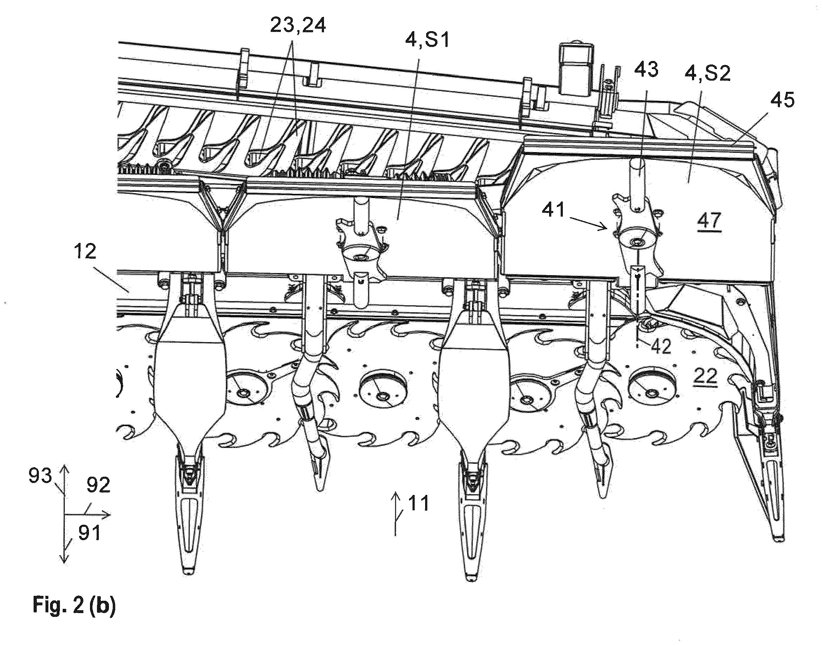

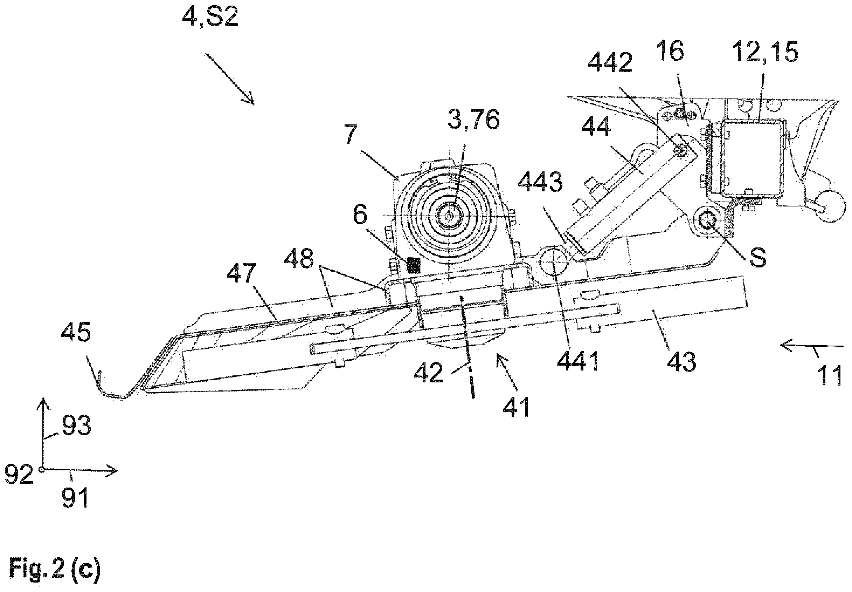

Es hat sich als vorteilhaft erwiesen, die nach dem Schnitt im Feldboden verbliebenen Pflanzenstängel zu zerkleinern, zu zerstampfen und/oder zu zerfasern, beispielsweise um eine Verrottung der Pflanzenstängel zu fördern. Zur Bearbeitung der Pflanzenstängel weist das Erntevorsatzgerät 1 mindestens eine Mulcheinheit 4 auf, die dazu vorgesehen ist, die im Feldboden verbleibenden Pflanzenstängel zu zerkleinern. Die Mulcheinheit 4 ist der Schneid- und/oder Fördereinrichtung 2 in einer Gutflussrichtung 11 nachgeordnet. Die Mulcheinheit 4 bearbeitet die Pflanzenstängel mit einem Bearbeitungswerkzeug 41 (s. Fig. 2 (b) und (c)) mechanisch, nachdem die Schneid- und/oder Fördereinrichtung 2 das Erntegut, insbesondere bodennah, abgeschnitten hat.

Damit die Pflanzenstängel über eine gesamte Arbeitsbreite des Erntevorsatzgerätes 1 bearbeitbar sind, weist das Erntevorsatzgerät 1 eine Vielzahl Mulcheinheiten 4 auf, die in einer Querrichtung 92, die sich quer zur Fahrtrichtung 91 erstreckt, über eine Breite des Erntevorsatzgeräts 1 gleichmäßig verteilt angeordnet sind.

Zum Antreiben der Mulcheinheiten 4 ist für jeden der Abschnitte 13, 14 jeweils ein Antriebsstrang 3 vorgesehen, innerhalb dessen die an dem jeweiligen Abschnitt 13, 14 angeordneten Mulcheinheiten 4 antreibbar sind. Der Antriebsstrang 3 umfasst im Erntevorsatzgerät 1 eine Antriebswelle 31. Weiterhin umfasst er für jede der Mulcheinheiten 4 ein Getriebe 7. Zudem umfasst er Gelenkwellen 72, mit denen die Getriebe 7 benachbarter Mulcheinheiten 4 gelenkig miteinander verbunden sind. In Fig. 1 sind im rechten Abschnitt 14 um die Gelenkwellen 72 Staub- und/oder Spritzschutzmittel (nicht bezeichnet) angeordnet, die im linken Abschnitt 13 zur Verdeutlichung nicht dargestellt sind.

Das Erntevorsatzgerät 1 mit den Mulcheinheiten 4 wird über ein Hauptgetriebe 8 angetrieben. Das Hauptgetriebe 8 weist einen Zapfwellenanschluss 81 auf, mit dem es leistungsempfangend an die Erntemaschine anschließbar ist. Abtriebsseitig ist es an die beiden Antriebswellen 31 der Antriebsstränge 3 zum Antrieb der Mulcheinheiten 4 angeschlossen. Weiterhin ist es abtriebsseitig an einen Antriebsstrang (nicht gezeigt) zum Antrieb der Schneid- und/oder Fördereinrichtung 2 angeschlossen. Es können noch weitere Antriebsstränge (nicht gezeigt) zum Antrieb weiterer Komponenten des Erntevorsatzgerätes 1 vorgesehen sein.

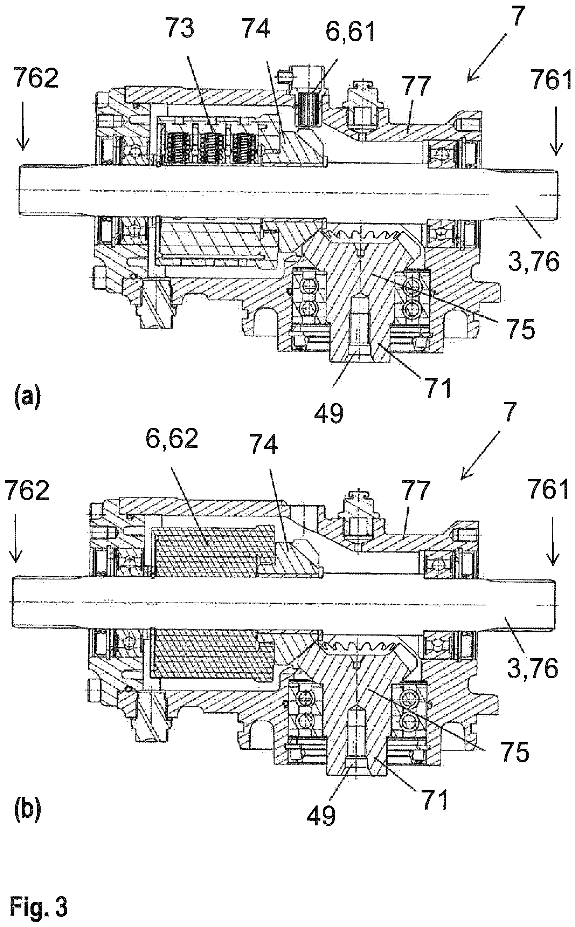

Um die Mulcheinheiten 4, die Getriebe 7, 8 und/oder die Antriebsstränge 3 vor Überlastung zu schützen, weist das Erntevorsatzgerät Sensoren 6 (siehe auch Fig. 3) auf, die zum Erfassen einer an einer der Mulcheinheiten 4 auftretenden Überlast vorgesehen sind. Im vorliegenden Ausführungsbeispiel weist jedes der zum Antrieb einer der Mulcheinheiten 4 vorgesehenen Getriebe 7 jeweils einen Sensor 6 auf.

Weiterhin kann die Erntemaschine und/oder das Erntevorsatzgerät 1 einen als Gutflusssensor ausgebildeten Sensor 6' zur Erfassung eines Erntegutflusses im Erntevorsatzgerät 1 und/oder in der Erntemaschine aufweisen. Der Sensor 6' ist hier im Erntevorsatzgerät 1 angeordnet. Er kann als NIR- Sensor oder als optoelektrischer Sensor ausgebildet sein. Alternativ oder zusätzlich kann auch ein Sensor zur Erfassung einer Auslenkung einer Einzugswalze, der in einer Einzugsanordnung der Erntemaschine angeordnet ist, als Gutflusssensor genutzt werden. Zudem kann alternativ oder zusätzlich auch ein Sensor, der in einem Auswurfbogen der Erntemaschine angeordnet und beispielsweise als NIR-Sensor ausgebildet ist, zur Erfassung des Gutflusses genutzt werden.

Die Sensoren 6, 6' sind mit einer Steuerungseinheit 5 verbunden, die dazu eingerichtet ist, die Mulcheinheiten 4 bei Erfassen der Überlast und/oder bei verringertem oder ausbleibendem Gutfluss von einer Arbeitsstellung S1 in eine angehobene Stellung S2 zu verschwenken. Dafür weisen die Mulcheinheiten 4 jeweils einen Aktor 44 auf.

In der Arbeitsstellung S1 liegen die Mulcheinheiten 4, insbesondere mit ihrer Gewichtskraft, auf dem Feldboden auf, während sie in der angehobenen Stellung S2 von diesem beabstandet sind. Durch das Anheben wird eine Mulcheinheit 4 oder werden mehrere Mulcheinheiten 4 in einer Höhe über den Feldboden geführt. Dadurch können Bodenunebenheiten und/oder Hindernisse überwunden werden, ohne das Erntevorsatzgerät 1, die Mulcheinheiten 4 und/oder den Antriebsstrang 3 zu überlasten.

Im Falle eines verringerten oder ausbleibenden Gutflusses werden alle Mulcheinheiten 4 des Erntevorsatzgerätes 1 angehoben. Dadurch wird ein unnötiger Betrieb der Mulcheinheiten 4 vermieden, so dass erst gar keine Überlast am Bearbeitungswerkzeug 41 auftreten kann.

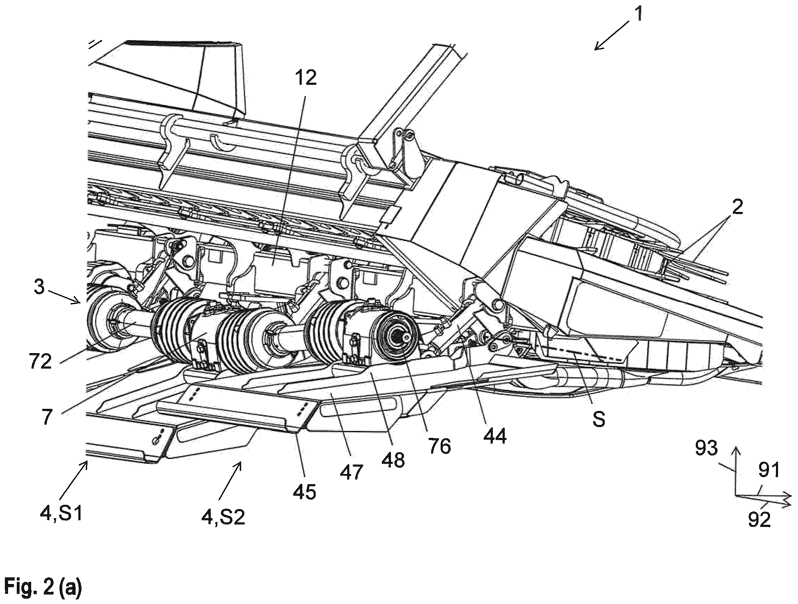

In Fig. 1 sind die Mulcheinheiten 4 im linken Abschnitt 13 alle in der Arbeitsstellung S1 dargestellt, während im rechten Abschnitt 14 eine der Mulcheinheiten 4 gegenüber den anderen in der angehobenen Stellung S2 gezeigt ist. Das Verschwenken der Mulcheinheit 4 wird im Folgenden anhand der Fig. 2 näher erläutert.

Fig. 2 (a) zeigt einen Ausschnitt des rechten Abschnittes 14 des Erntevorsatzgeräts 1 der Fig. 1 in einer perspektivischen Ansicht.

Im Feldbetrieb stützt sich die Mulcheinheit 4 mittels einer Gleitkufe 45 auf dem Feldboden ab. Die Mulcheinheit 4 liegt dabei mit ihrer Gewichtskraft auf dem Feldboden auf. Sie ist dann in der Arbeitsstellung S1 angeordnet.

Die Mulcheinheit 4 ist um eine Schwenkachse S schwenkbar am Rahmen 12 des Erntevorsatzgeräts 1 angelenkt. Das Schwenken der Mulcheinheit 4 um die Schwenkachse S ermöglicht das Anheben der Mulcheinheit 4 vom Feldboden. Die Schwenkachse S erstreckt sich in eine Querrichtung 92 quer zur Fahrtrichtung 91. Durch das Anheben ist die Mulcheinheit 4 in der angehobenen Stellung S2 in eine Hochrichtung 93, die sich quer zur Querrichtung 92 und quer zur Fahrtrichtung 91 erstreckt, vom Feldboden beabstandet. Zum Anheben weist die Mulcheinheit 4 den Aktor 44 auf. Der Aktor 44 erstreckt sich dafür zwischen dem Erntevorsatzgerät 1 und der Mulcheinheit 4. Dies ist in Fig. 2 (c) näher beschrieben. Der Antrieb der Mulcheinheit 4, insbesondere des Bearbeitungswerkzeugs 41, kann in der angehobenen Stellung S2, insbesondere automatisch, abschaltbar vorgesehen sein.

Zur Bearbeitung der Pflanzenstängel weist die Mulcheinheit 4 das Bearbeitungswerkzeug 41 auf. Das Bearbeitungswerkzeug 41 ist in Hochrichtung 93 gesehen unterhalb einer Abdeckung 47 der Mulcheinheit 4 angeordnet (s. Fig. 2 (b) und (c)). Die Abdeckung 47 verhindert, dass mit dem Bearbeitungswerkzeug 41 (s. Fig. 2 (b) und (c)) bearbeitete Pflanzenstängel hochgeschleudert werden.

Sichtbar ist, dass sich die Gelenkwelle 72 des Antriebsstrangs 3 zwischen der in der angehobenen Stellung S2 angeordneten Mulcheinheit 4 und der benachbarten, in der Arbeitsstellung S1 angeordneten Mulcheinheit 4 in einem Winkel (nicht bezeichnet) zur Querrichtung 92 erstreckt. Die Getriebe 7 dieser Mulcheinheiten 4 sind dadurch in Hochrichtung 93 zueinander versetzt angeordnet. Dies ist möglich, indem die Gelenkwellen 72 zwischen den Getrieben 7 der Mulcheinheiten 4 jeweils mittels Kardangelenke 78 an Getriebewellen 76 der Getriebe 7 angebunden sind.

Im Antriebsstrang 3 sind die Getriebe 7 in Reihe (nicht bezeichnet) hintereinander angeordnet und durch die Gelenkwellen 72 miteinander verbunden. Dafür sind die Getriebe 7 hier als T- Getriebe ausgebildet und weisen jeweils die Getriebewelle 76 (s. Fig. 3), die sie durchsetzt, auf. Antriebsseitig ist die Getriebewelle 76 des ersten Getriebes 7 der Reihe an die Antriebswelle 31 des Erntevorsatzgerätes 1 oder an ein dem Getriebe 7 vorgeschaltetes Stirnradgetriebe (nicht bezeichnet) angeschlossen. Die Getriebewellen 76 der nachgeordneten Getriebe 7 sind antriebsseitig jeweils an die Getriebewelle 76 des ihnen benachbarten, vorgeordneten Getriebes 7 angeschlossen. Abtriebsseitig sind die Getriebewellen 76 der Getriebe 7, ausgenommen das letzte Getriebe 7 der Reihe, jeweils zum Antrieb des ihnen benachbarten, nachfolgenden Getriebes 7 vorgesehen. Dabei sind die Gelenkwellen 72 ebenfalls mittels Kardangelenke 78 an die Getriebewellen 76 des nachfolgenden Getriebes 7 angelenkt. Diese Anlenkung ermöglicht den räumlichen Versatz zwischen den Getrieben 7, so dass die Mulcheinheiten 4 jeweils relativ zu ihren benachbarten Mulcheinheiten 4 anhebbar ist.

Fig. 2 (b) zeigt einen Ausschnitt aus dem Erntevorsatzgerät 1 der Fig. 2 (a) in einer perspektivischen Ansicht, in der eine Unterseite (nicht bezeichnet) des Erntevorsatzgerätes 1 mit mehreren Mulcheinheiten 4 sichtbar ist. Zu sehen sind die Bearbeitungswerkzeuge 41 der Mulcheinheiten 4, die jeweils um eine Antriebsachse 42 von ihrem Getriebe 7 rotierend antreibbar sind. Die Antriebsachsen 42 der Bearbeitungswerkzeuge 41 sind quer zur Getriebewelle 76 des Getriebes 7 ausgerichtet (s. dazu auch Fig. 3).

Das Bearbeitungswerkzeug 41 ist an einen werkzeugseitigen Abtrieb 71 (s. Fig. 3) des Getriebes 7 drehfest befestigt, beispielsweise angeschraubt, so dass der Schlagkörper 43 um die Antriebsachse 42 drehbar ist.

Es weist hier einen stumpfen Schlagkörper 43 auf, der dazu vorgesehen ist, die Pflanzenstängel im Feldboden zu bearbeiten. Um eine Unwucht zu vermeiden, sind eine Mehrzahl insbesondere baugleicher Schlagkörper 43 auf um die Antriebsachse 42 gleichmäßig verteilt angeordnet. Hier ist eine Ausführungsform mit zwei Schlagkörpern 43 dargestellt. Es können jedoch auch drei oder mehr Schlagkörper 43 verwendet werden. Zudem können anstelle der Schlagkörper 43 auch Messer vorgesehen sein.

Weiterhin weist die Mulcheinheit 4 einen Mulcherrahmen 48 und die Abdeckung 47 auf. Die Abdeckung 47 ist oberhalb des Bearbeitungswerkzeugs 41 angeordnet. Sie verhindert, dass bearbeitete Pflanzenstängel oder aufgewühlter Feldboden durch das rotierende Bearbeitungswerkzeug 41 nach oben geschleudert werden. Dabei kann die Abdeckung 47 als Blech ausgebildet sein. Die Abdeckung ist an dem Mulcherrahmen 48 befestigt, der insbesondere aus Stegen und Rippen gebildet ist. Zudem ist oberseitig der Mulcheinheit, an einer dem Bearbeitungswerkzeug 41 abgewandten Seite der Abdeckung 47, das Getriebe 7 angeordnet. Die Abdeckung 47 erstreckt sich in Gutflussrichtung 11 zu einem Ende hin, an dem die Gleitkufe 45 angebracht ist.

Die Gleitkufe 45 kann mittels eines Lochbildes und/oder eines Langlochs relativ zu der Abdeckung 47 und/oder relativ zu dem Bearbeitungswerkzeug 41 verstellt werden. Hier nicht dargestellt, jedoch auch im Rahmen der Erfindung, kann die Gleitkufe 45 auch mittels eines Verstellaktors (nicht gezeigt) verstellbar ausgebildet sein, wobei der Verstellaktor mit einem Ende am Mulcherrahmen 48 und/oder der Abdeckung 47 der Mulcheinheit 4 angelenkt und mit einem weiteren Ende an der Gleitkufe 45 angelenkt ist. Durch Verstellen der Gleitkufe 45 ist in der Arbeitsstellung S1 eine Höhe des Bearbeitungswerkzeugs 41 gegenüber dem Feldboden einstellbar.

**In** Fig. 2(b) ist außerdem die Schneid- und/oder Fördereinrichtung 2 dargestellt. Die Schneid- und/oder Fördereinrichtung 2 umfasst hier eine Vielzahl Schneidelemente 22 sowie eine Vielzahl Förderelemente 23. Die Schneidelemente 22 sind als rotierend antreibbare Schneidscheiben ausgebildet, und über die Arbeitsbreite des Erntevorsatzgerätes 1 gleichmäßig verteilt angeordnet. Zum Schneiden der Pflanzenstängel kann aber auch anstelle dieser Schneidelemente 22 ein Messerbalken oder dergleichen genutzt werden.

Zum Fördern des Erntegutes wird hier ein umlaufend angetriebener Endlosförderer (nicht bezeichnet) genutzt. Jeder Abschnitt 13, 14 des Erntevorsatzgerätes 1 weist zumindest einen solchen Endlosförderer auf. Am Endlosförderer sind die Förderelemente 23 angeordnet. Jedes der Förderelemente 23 weist eine Vielzahl Förderzinken 24 auf, die zur Mitnahme des von dem Schneidelement 23 geschnittenen Erntegutes vorgesehen sind. Alternativ kann als Förderelement 23 auch ein Querförderer in Form einer Schnecke, rotierende Fördertrommeln oder dergleichen verwendet werden.

Fig. 2(c) zeigt eine Seitenansicht eines Schnittbildes der am Erntevorsatzgerät 1 angeordneten Mulcheinheit 4. Zu sehen ist neben der Mulcheinheit 4 die Anlenkung der Mulcheinheit 4 an den Rahmen 12 des Erntevorsatzgerätes 1.

Der Rahmen 12 des Erntevorsatzgerätes 1 umfasst einen sich in Querrichtung 92 erstreckenden Querträger 15, an den eine Konsole 16 angeschraubt ist. Die Konsole ist daher lösbar am Querträger 15 befestigt und durch Abschrauben demontierbar. Es können auch andere Befestigungsmittel (nicht dargestellt) vorgesehen sein, mit denen die Konsole lösbar, beispielsweise durch Rasten oder Klemmen, oder unlösbar, beispielsweise durch Kleben, Schweißen oder Nieten, am Rahmen 12 des Erntevorsatzgerätes 1 befestigt ist.

Der Mulcherrahmen 48 ist um die Schwenkachse S schwenkbar an der Konsole 16 gelagert. Die Schwenkachse S kann sich beispielsweise entlang einer durch ein Bolzengelenk gebildeten Schwenkwelle (nicht bezeichnet) erstrecken. Dabei ist die Mulcheinheit 4 in der Arbeitsstellung S1 an der Schwenkachse S frei schwingend aufgehängt, wird mit ihrer Gewichtskraft über den Feldboden geführt und kann einer Bodenkontur des Feldbodens daher folgen. Zur Abstützung auf dem Feldboden ist die Gleitkufe 45 vorgesehen.

Der Aktor 44 zum Verschwenken der Mulcheinheit 4 erstreckt sich zwischen dem Erntevorsatzgerät 1, hier der Konsole 16, und dem Mulcherrahmen 48. Er ist beispielsweise jeweils mittels eines Bolzens 441, 442, insbesondere um die jeweilige Bolzenachsen (nicht bezeichnet), drehbar an der Konsole 16 und an dem Mulcherrahmen 48 befestigt.

Der Aktor 44 ist hier ein pneumatischer und/oder hydraulischer Zylinder, und insbesondere einfachwirkend ausgeführt. Durch Einfahren einer Kolbenstange 443 des Aktors 44 wird die Mulcheinheit 4 gegenüber dem Feldboden von der Arbeitsstellung S1 in die angehobene Stellung S2 angehoben.

Das Getriebe 7 ist an einer Oberseite (nicht bezeichnet) der Abdeckung 47, insbesondere am Mulcherrahmen 48 und/oder der Abdeckung 47, befestigt. Es wird daher beim Verschwenken der Mulcheinheit 4 um die Schwenkachse S mit dieser gemeinsam angehoben.

Sichtbar ist die Getriebewelle 76 des Getriebes 7. Werkzeugseitig weist das Getriebe 7 einen Abtrieb 71 (s. Fig. 3) auf, der sich in Richtung der Antriebsachse des Bearbeitungswerkzeugs 41 erstreckt und von der Getriebewelle 76 rotierend antreibbar ist. Das Bearbeitungswerkzeug 41 ist drehfest am Abtrieb 71 befestigt und wird daher bei Antrieb des Getriebes 1 um die Antriebsachse 42 angetrieben.

Der Sensor 6 zur Erfassung der Überlast ist im Getriebe 7 angeordnet. Dies wird im Rahmen der Fig. 3 beschrieben.

Die Überlast tritt bei Auftreffen des Bearbeitungswerkzeugs 41 auf ein Hindernis wie beispielsweise einen Stein oder den Feldboden am Bearbeitungswerkzeug 41 der Mulcheinheit 4 auf. Dabei wird das Bearbeitungswerkzeug 41 abgebremst oder blockiert. Dabei vergrößert sich das auf das Bearbeitungswerkzeug wirkende Drehmoment und die Drehzahl verringert sich. Durch Ausbilden des Sensors 6 als Drehzahlsensor 61 oder als Drehmomentsensor 62 sind ein solches Auftreffen auf das Hindernis und die dabei auftretende Überlast daher messbar.

Bei Erfassen der Überlast sendet der Sensor 6 ein Signal an die Steuerungseinheit 5, die den Aktor 44 veranlasst, die Mulcheinheit 4 von der Arbeitsstellung S1 in die angehobene Stellung S2 zu verschwenken. **In** der angehobenen Stellung S2 wird das Bearbeitungswerkzeug 41 über das die Überlast verursachende Hindernis hinweggehoben und/oder aus dem Feldboden herausgehoben.

Dabei ist die Steuerungseinheit 5 dazu eingerichtet, die Mulcheinheit 4 in eine voreingestellte Überlasthöhe anzuheben. Alternativ kann eine Höhe, in die die Mulcheinheit 4 in der angehobenen Stellung S2 angehoben wird, auch in Abhängigkeit von einem Betrag der Überlast eingestellt werden.

Die Steuerungseinheit 5 ist weiterhin dazu eingerichtet, die Mulcheinheit 4 danach zeitgesteuert und/oder weggesteuert von der angehobenen Stellung S2 in die Arbeitsstellung S1 zurück zu verschwenken. Auch dabei kann die Zeitsteuerung und/oder die Wegsteuerung beim Zurückschwenken der Mulcheinheit 4 von der angehobenen Stellung S2 in die Arbeitsstellung S1 mit voreingestellten oder voreinstellbaren Beträgen für die Zeit und/oder den Weg erfolgen, oder in Abhängigkeit vom Betrag der Überlast.

Es können auch mehrere Mulcheinheiten 4 einer Gruppe zugeordnet sein. Bei dieser Ausführungsform kann vorgesehen sein, dass die Steuerungseinheit 5 die bei Erfassen der Überlast an einer der Mulcheinheiten 4 der Gruppe alle Mulcheinheit 4 der Gruppe von der Arbeitsstellung S1 in die angehobene Stellung S2 verschwenkt. Insbesondere können die Mulcheinheiten 4 jeweils eines der Abschnitte 13, 14 des Erntevorsatzgerätes 1 und/oder diejenigen Mulcheinheiten 4, die an denselben Antriebsstrang 3 angeschlossen sind, einer Gruppe zugeordnet sein und gemeinsam von der Arbeitsstellung S1 in die angehobene Stellung S2 verschwenkt werden.

Fig. 3 zeigt in (a) und (b) verschiedene Ausführungsformen eines Getriebes 7 für eine solche Mulcheinheit 4.

Die Getriebe 7 sind jeweils als T-Getriebe ausgebildet. Sie weisen jeweils ein Gehäuse 77 auf, das von der Getriebewelle 76 durchsetzt ist. Die Getriebewellen weisen einander gegenüberliegende offene Enden 761, 762 auf. Die offenen Enden 761, 762 sind jeweils, insbesondere mittels der Kardangelenke 78 und Gelenkwellen 72, antriebsseitig an die Antriebswelle 31 des Erntevorsatzgerätes 1 oder an das ihnen vorgeordnete Getriebe 7 der ihnen vorgeordneten Mulcheinheit 4 anschließbar, und abtriebsseitig an das ihnen jeweils nachgeordnete Getriebe 7 der ihnen nachgeordneten Mulcheinheit 4.

Jedes der Getriebe 7 umfasst ein Kegelradpaar 74, 75 mit einem ersten Kegelrad 74, das die Getriebewelle 76 vollumfänglich umgibt, und einem zweiten Kegelrad 75, das einen werkzeugseitigen Abtrieb 71 bildet. Die beiden Kegelräder 74, 75 weisen jeweils eine Verzahnung (nicht bezeichnet) auf, die miteinander in Eingriff sind, so dass das zweite Kegelrad 75 bei Antrieb des ersten Kegelrades 74 angetrieben wird. Das Bearbeitungswerkzeug 41 ist, insbesondere an einer Befestigungsstelle 49, an den werkzeugseitigen Abtrieb 71 montiert. Dadurch wird auch das Bearbeitungswerkzeug 41 bei Antrieb des ersten Kegelrades 74 angetrieben. Die Antriebsachse 42 (s. Fig. 2 (c)) des Bearbeitungswerkzeugs 41 ist dabei quer zur Getriebewelle 76 ausgerichtet.

Das Getriebe 7 weist eine Überlastkupplung 73 auf, die hier beispielhaft als Ratschenkupplung ausgebildet ist. Die Überlastkupplung 73 ist dazu vorgesehen, bei Auftreten der Überlast an der Mulcheinheit 4 den Antriebsstrang 3 vom werkzeugseitigen Abtrieb 71 der Mulcheinheit 4 trieblich zu trennen. Sie weist dafür Eingriffsmittel (nicht gezeigt) auf, die in einem eingekuppelten Zustand (nicht bezeichnet) der Überlastkupplung 73 federbelastet in Eingriff mit Gegeneingriffsmitteln (nicht gezeigt) der Getriebewelle 76 sind, insbesondere mit Ausnehmungen der Getriebewelle 76, und die bei Überschreiten einer Eingriffskraft außer Eingriff mit den Gegeneingriffsmitteln geraten, so dass die Überlastkupplung 73 von der Getriebewelle 76 abgekuppelt wird. Die Überlastkupplung 73 rutscht dann auf der Getriebewelle 76 durch.

Das erste Kegelrad 74 ist drehfest an der Überlastkupplung 73 gelagert. Im eingekuppelten Zustand der Überlastkupplung 73 dreht es sich daher mit der Getriebewelle 76. Bei Auftreten der Überlast am Bearbeitungswerkzeug 41 wird dieses abgebremst oder blockiert sogar, so dass das zweite Kegelrad 75 abgebremst wird. Dadurch wird auch das erste Kegelrad 74 abgebremst. In Abhängigkeit von der auf das erste Kegelrad 74 wirkenden Kraft, das heißt bei Überschreiten der Eingriffskraft, rutscht die Überlastkupplung 73 durch, so dass das Bearbeitungswerkzeug 41 trieblich von der Getriebewelle 76, und somit dem Antriebsstrang 3, getrennt wird. Dadurch wird der Antriebsstrang 3 bei Überlastung des Bearbeitungswerkzeugs 41 vor einer Beschädigung geschützt.

Bei dem Getriebe 7 der Fig. 3 (a) ist der Sensor 6 als Drehzahlsensor 61 ausgebildet. Der Drehzahlsensor 61 ist im Gehäuse 77 befestigt und erfasst eine Drehzahl des ersten Kegelrades 74. Da die beiden Kegelräder 74, 75 miteinander in Eingriff sind, wird dadurch auch die Drehzahl des werkzeugseitigen Abtriebs 71 erfasst. Das Auftreten der Überlast wird erfasst, wenn die Drehzahl des werkzeugseitigen Abtriebs 71 einen Schwellwert unterschreitet.

Sofern mehrere Mulcheinheiten 4 einer Gruppe zugeordnet sind, kann das Auftreten der Überlast alternativ dann erfasst werden, wenn eine Drehzahldifferenz zwischen einer höchsten der aktuell erfassten Drehzahlen der Mulcheinheiten 4 der Gruppe und einer niedrigsten der aktuell erfassten Drehzahlen der Mulcheinheiten 4 der Gruppe einen Schwellwert unterschreitet.

Der Drehzahlsensor 61 oder die Drehzahlsensoren 61 senden ihren Messwert an die Steuerungseinheit 5, die den Schwellwertvergleich durchführt und bei erfasster Überlast die Mulcheinheit 4 oder die Mulcheinheiten 4 der Gruppe von der Arbeitsstellung S1 in die angehobene Stellung S2 verschwenkt.

Fig. 3 (b) zeigt eine Ausführungsform des Getriebes 7, bei der der Sensor 6 zur Erfassung der Überlast als Drehmomentsensor 62 ausgebildet ist. Der Drehmomentsensor 62 ist hier in Form einer Drehmomentmessnabe 62 ausgeführt. Daher werden die Begriffe Drehmomentsensor 62 und Drehmomentmessnabe 62 im Folgenden synonym verwendet.

Auch bei dieser Ausführungsform weisen die beiden Kegelräder 74, 75 jeweils eine Verzahnung (nicht bezeichnet) auf, die miteinander in Eingriff sind, so dass das zweite Kegelrad 75 bei Antrieb des ersten Kegelrades 74 angetrieben wird. Jedoch ist hier keine Überlastkupplung 73 sichtbar. Dennoch weist das Getriebe 7 auch hier bevorzugt die Überlastkupplung 73 auf, um den werkzeugseitigen Abtrieb 71 vom Antriebsstrang 3 zu trennen. Die Überlastkupplung kann dabei beispielsweise in die Drehmomentmessnabe 62 integriert sein.

Der Drehmomentsensor 62 erfasst das am ersten Kegelrad 74 anliegende Drehmoment. Da das erste und zweite Kegelrad 74, 75 miteinander in Eingriff sind, wird dadurch das am Bearbeitungswerkzeug 41 anliegende Drehmoment erfasst. Dabei wird das Auftreten der Überlast durch einen Schwellwertvergleich erfasst, und zwar, wenn das Drehmoment einen Schwellwert überschreitet.

Auch bei dieser Ausführungsform des Sensors 6 kann bei gruppierten Mulcheinheiten 4 die Überlast alternativ erfasst werden, wenn eine Drehmomentdifferenz zwischen einer höchsten der aktuell erfassten Drehmomente der Mulcheinheiten 4 der Gruppe und einer niedrigsten der aktuell erfassten Drehmomente der Mulcheinheiten 4 der Gruppe einen Schwellwert überschreitet.

Der Drehmomentsensor 61 oder die Drehmomentsensoren 61 senden ihren Messwert an die Steuerungseinheit 5, die den Schwellwertvergleich durchführt und bei erfasster Überlast die Mulcheinheit 4 oder die Mulcheinheiten 4 der Gruppe von der Arbeitsstellung S1 in die angehobene Stellung S2 verschwenkt.

Bei beiden in Fig. 3 beschriebenen Ausführungsformen erfolgt das Zurückschwenken der Mulcheinheit 4 oder Mulcheinheiten 4 von der angehobenen Stellung S2 in die Arbeitsstellung S1 automatisch, insbesondere zeitgesteuert und/oder weggesteuert. Denkbar ist auch ein automatisches Absenken der Mulcheinheit 4 oder Mulcheinheiten 4 in Abhängigkeit von der Drehzahl oder dem Drehmoment am Bearbeitungswerkzeug 41 oder an den Bearbeitungswerkzeugen 41.

Die aktuell erfassten Messwerte, insbesondere Drehzahl oder Drehmoment, des Sensors 6 und/oder das Auftreten der Überlast können dem Bediener, beispielsweise in einer Fahrerkabine der Erntemaschine 1, an einer Bedienerkonsole angezeigt werden. Bei Auftreten der Überlast kann alternativ oder zusätzlich ein akustisches Signal für den Fahrer ausgegeben werden.

Zudem können bei auftreten der Überlast gezielt Navigationsdaten, insbesondere eines GPS- Empfängers (nicht gezeigt) der Erntemaschine 1, gespeichert werden, um den Feldboden später gezielt nachbearbeiten zu können.

## Patentansprüche

1. Erntemaschine (1) mit einem Erntegerät (1), an dem wenigstens eine Mulcheinheit (4) angeordnet ist, wobei
• das Erntegerät (1) eine Schneid- (2) und/oder Fördereinrichtung (3) zum Ernten von stängelartigem Erntegut aufweist, und
• die Mulcheinheit (4) ein um eine Antriebsachse (42) rotierend antreibbares Bearbeitungswerkzeug (41) zum Bearbeiten von bei der Ernte in einem Feldboden verbleibenden Pflanzenstängeln aufweist, der Schneid- (2) und/oder Fördereinrichtung (3) in einer Gutflussrichtung (11) nachgeordnet ist, sich in einem Feldbetrieb in einer Arbeitsstellung (S1) auf dem Feldboden abstützt, und um eine Schwenkachse (S) an einem Rahmen (12) des Erntegerätes (1) relativ zu diesem schwenkbar gelagert ist,
wobei die Erntemaschine eine Steuerungseinheit (5) und wenigstens einen Sensor (6) umfasst,
**dadurch gekennzeichnet, dass**
der Sensor (6) zur Erfassung einer auf das Bearbeitungswerkzeug (41) wirkenden Überlast vorgesehen ist, und die Steuerungseinheit (5) dazu eingerichtet ist, die Mulcheinheit (4) bei Erfassen der Überlast relativ zur Arbeitsstellung (S1) in eine angehobene Stellung (S2) zu verschwenken.

2. Erntemaschine nach Anspruch 1, **dadurch gekennzeichnet, dass** der Sensor (6) zur Erfassung der Überlast vorgesehen ist, und ein Drehzahlsensor (61) oder ein Drehmomentsensor (62) ist, der an der Mulcheinheit (4) angeordnet ist.

3. Erntemaschine nach einem der vorherigen Ansprüche, **dadurch gekennzeichnet, dass** die Mulcheinheit (4) ein Getriebe (7) umfasst, das eingangsseitig an einen Antriebsstrang (13) des Erntegerätes (1) und/oder der Erntemaschine angeschlossen ist, und das einen werkzeugseitigen Abtrieb (71) zum Antrieb des Bearbeitungswerkzeugs (41) umfasst, wobei der Sensor (6) zum Erfassen der Überlast im Getriebe (7) angeordnet ist und
• am werkzeugseitigen Abtrieb (71) des Getriebes eine Drehzahl des Bearbeitungswerkzeugs (41) erfasst, oder
• als Drehmomentmessnabe ausgebildet ist und antriebsseitig des Getriebes (7) oder am werkzeugseitigen Abtrieb (71) des Getriebes ein Drehmoment erfasst.

4. Erntemaschine nach einem der vorherigen Ansprüche, **dadurch gekennzeichnet, dass** sie eine Vielzahl Mulcheinheiten (4) aufweist, wobei für jede der Mulcheinheiten (4) jeweils ein Getriebe (7) vorgesehen ist, wobei jede der Mulcheinheiten (4) einen Sensor (6) zum Erfassen der Überlast umfasst.

5. Erntemaschine nach einem der vorherigen Ansprüche, **dadurch gekennzeichnet, dass** die Getriebe (7) der Mulcheinheiten (4) mittels Gelenkwellen (72) miteinander verbunden sind.

6. Erntemaschine nach einem der vorherigen Ansprüche, **dadurch gekennzeichnet, dass** jeweils mindestens zwei Mulcheinheiten (4), die an denselben Antriebsstrang (8) angeschlossen sind, eine Gruppe bilden.

7. Erntemaschine nach einem der vorherigen Ansprüche, **dadurch gekennzeichnet, dass** das Erntegerät wenigstens zwei Abschnitte (13, 14) umfasst, wobei jedem der Abschnitte (13,14) mindestens zwei Mulcheinheiten (4), insbesondere derselben Gruppe, zugeordnet ist, die über eine Breite der Abschnitte (13, 14) jeweils gleichmäßig verteilt angeordnet sind.

8. Erntemaschine nach einem der vorherigen Ansprüche, **dadurch gekennzeichnet, dass** die Steuerungseinheit (5) dazu eingerichtet ist, bei Erfassen der Überlast an einer Mulcheinheit (4) diese Mulcheinheit (4) oder die Mulcheinheiten (4) des Abschnittes (13, 14) dieser Mulcheinheit (4) oder die Mulcheinheiten (4) der Gruppe dieser Mulcheinheit (4) von der Arbeitsstellung (S1) in die angehobene Stellung (S2) zu verschwenken.

9. Erntemaschine nach einem der vorherigen Ansprüche, **dadurch gekennzeichnet, dass** das Getriebe (7) eine Überlastkupplung (73) aufweist, die dazu eingerichtet ist, den Antriebsstrang (8) des Erntegerätes und/oder der Erntemaschine vom werkzeugseitigen Abtrieb (71) des Getriebes trieblich zu trennen.

10. Erntemaschine nach einem der vorherigen Ansprüche, **dadurch gekennzeichnet, dass** die Steuerungseinheit (5) dazu eingerichtet ist, die Überlast zu erfassen, wenn
a) die aktuell erfasste Drehzahl des Bearbeitungswerkzeugs (41), oder
b) eine Drehzahldifferenz zwischen einer höchsten der aktuell erfassten Drehzahlen von mindestens zwei Mulcheinheiten (4), insbesondere derselben Gruppe, und einer niedrigsten der aktuell erfassten Drehzahlen der mindestens zwei Mulcheinheiten (4),
einen Schwellwert unterschreitet, und/oder wenn
c) das aktuell erfasste Drehmoment des Bearbeitungswerkzeugs (41), oder
d) eine Drehmomentdifferenz zwischen einem höchsten der aktuell erfassten Drehmomente von mindestens zwei Mulcheinheiten (4), insbesondere derselben Gruppe, und einem niedrigsten der aktuell erfassten Drehmomente der mindestens zwei Mulcheinheiten (4),
einen Schwellwert überschreitet, und/oder wenn
e) eine Differenz aus einer Antriebsdrehzahl des Erntegerätes (1) oder der Erntemaschine und der aktuell erfassten Drehzahl des Bearbeitungswerkzeugs (41) einen Schwellwert unterschreitet, oder
f) eine Differenz aus einem Antriebsdrehmoment des Erntegerätes (1) oder der Erntemaschine und dem Drehmoment des Bearbeitungswerkzeugs (41) einen Schwellwert überschreitet.

11. Erntemaschine nach Anspruch 1, **dadurch gekennzeichnet, dass** ein Sensor (6') zur Erfassung des Gutflusses vorgesehen ist, und die Steuerungseinheit (5) dazu eingerichtet ist, die Mulcheinheit (4) bei Erfassung eines verringerten oder ausbleibenden Gutflusses relativ zur Arbeitsstellung (S1) in die angehobene Stellung (S2) zu verschwenken.

12. Erntemaschine nach Anspruch 11, **dadurch gekennzeichnet, dass** der Sensor (6') zur Erfassung des Gutflusses im Erntegerät (1), in einer Einzugsanordnung der Erntemaschine oder in einem Auswurfbogen der Erntemaschine angeordnet ist.

13. Erntemaschine nach einem der vorherigen Ansprüche, **dadurch gekennzeichnet, dass** die Steuerungseinheit (5) dazu eingerichtet ist, die Mulcheinheit (4) beim Schwenken in die angehobene Stellung (S2) in eine in Abhängigkeit von einem Betrag der Überlast und/oder einem betriebsrelevanten Parameter bestimmte Höhe, oder in eine voreingestellte Überlasthöhe anzuheben.

14. Erntemaschine nach einem der vorherigen Ansprüche, **dadurch gekennzeichnet, dass** die Steuerungseinheit (5) dazu eingerichtet ist, die Mulcheinheit (4) zeitgesteuert oder weggesteuert aus der angehobenen Stellung (S2) in die Arbeitsstellung (S1) zurück zu verschwenken.

15. Erntemaschine nach einem der vorherigen Ansprüche, **dadurch gekennzeichnet, dass** das Erntegerät (1) einen Aktor (45) aufweist, der dazu vorgesehen ist, die Mulcheinheit (4) von der Arbeitsstellung (S1) in die angehobene Stellung (S2) und umgekehrt zu verschwenken.

16. Verfahren zum Betreiben einer Erntemaschine nach einem der vorherigen Ansprüche, bei dem wenigstens eine Drehzahl und/oder wenigstens ein Drehmoment eines Bearbeitungswerkzeugs (41) einer Mulcheinheit (4) der Erntemaschine (1) gemessen wird, eine am Bearbeitungswerkzeug (41) auftretende Überlast durch einen Schwellwertvergleich erfasst wird, und das Bearbeitungswerkzeug (41) bei Auftreten der Überlast von der Arbeitsstellung (S1) in eine angehobene Stellung (S2) verschwenkt wird.

## Claims

1. A harvester (1) having a harvesting device (1) on which at least one mulching unit (4) is arranged, wherein
• the harvesting device (1) has a cutting (2) and/or conveying apparatus (3) for harvesting stalk-like crops, and
• the mulching unit (4) has a processing tool (41) that can be driven in rotation about a drive axis (42) for processing plant stalks that remain in a field ground during harvesting, is arranged downstream of the cutting (2) and/or conveying apparatus (3) in a crop flow direction (11), is supported on the field ground in a working position (S1) during field operation, and is mounted on a frame (12) of the harvesting device (1) so as to be pivotable about a pivot axis (S) relative to said harvesting device,
wherein the harvester comprises a control unit (5) and at least one sensor (6),
**characterized in that**
the sensor (6) is provided for detecting an overload acting on the processing tool (41), and the control unit (5) is configured to pivot the mulching unit (4) into a raised position (S2) relative to the working position (S1) when the overload is detected.

2. The harvester according to claim 1, **characterized in that** the sensor (6) is provided for detecting the overload and is a speed sensor (61) or a torque sensor (62) arranged on the mulching unit (4).

3. The harvester according to any of the preceding claims,
**characterized in that** the mulching unit (4) comprises a transmission (7) that is connected on the input side to a drive train (13) of the harvesting device (1) and/or the harvester and comprises a tool-side output (71) for driving the processing tool (41), wherein the sensor (6) for detecting the overload is arranged in the transmission (7) and
• detects a speed of the processing tool (41) at the tool-side output (71) of the transmission, or
• is designed as a torque measuring hub and detects a torque on the drive side of the transmission (7) or on the tool-side output (71) of the transmission.

4. The harvester according to any of the preceding claims,
**characterized in that** it has a plurality of mulching units (4), wherein a transmission (7) is provided for each of the mulching units (4), wherein each of the mulching units (4) comprises a sensor (6) for detecting the overload.

5. The harvester according to any of the preceding claims,
**characterized in that** the transmissions (7) of the mulching units (4) are connected to each other by means of Cardan shafts (72).

6. The harvester according to any of the preceding claims,
**characterized in that** at least two mulching units (4) connected to the same drive train (8) form a group.

7. The harvester according to any of the preceding claims,
**characterized in that** the harvesting device comprises at least two portions (13, 14), wherein each of the portions (13, 14) is assigned at least two mulching units (4), in particular of the same group, which are arranged evenly distributed over a width of the portions (13, 14).

8. The harvester according to any of the preceding claims,
**characterized in that** the control unit (5) is configured to pivot this mulching unit (4) or the mulching units (4) of the portion (13, 14) of this mulching unit (4) or the mulching units (4) of the group of this mulching unit (4) from the working position (S1) to the raised position (S2) when the overload on a mulching unit (4) is detected.

9. The harvester according to any of the preceding claims,
**characterized in that** the transmission (7) has an overload clutch (73) that is configured to disconnect the drive train (8) of the harvesting device and/or the harvester from the tool-side output (71) of the transmission.

10. The harvester according to any of the preceding claims,
**characterized in that** the control unit (5) is configured to detect the overload when
a) the currently detected speed of the processing tool (41), or
b) a speed difference between a highest of the currently detected speeds of at least two mulching units (4), in particular of the same group, and a lowest of the currently detected speeds of the at least two mulching units (4) falls below a threshold value, and/or when
c) the currently detected torque of the processing tool (41), or
d) a torque difference between a highest of the currently detected torques of at least two mulching units (4), in particular of the same group, and a lowest of the currently detected torques of the at least two mulching units (4) exceeds a threshold value, and/or when
e) a difference between a drive speed of the harvesting device (1) or the harvester and the currently detected speed of the processing tool (41) falls below a threshold value, or
f) a difference between a drive torque of the harvesting device (1) or the harvester and the torque of the processing tool (41) exceeds a threshold value.

11. The harvester according to claim 1, **characterized in that** a sensor (6') is provided for detecting the crop flow, and the control unit (5) is configured to pivot the mulching unit (4) into the raised position (S2) relative to the working position (S1) when a reduced or absent material flow is detected.

12. The harvester according to claim 11, **characterized in that** the sensor (6') for detecting the crop flow is arranged in the harvesting device (1), in an intake arrangement of the harvester or in a discharge spout of the harvester.

13. The harvester according to any of the preceding claims,
**characterized in that** the control unit (5) is configured to raise the mulching unit (4), when pivoting into the raised position (S2), to a height determined depending on an amount of overload and/or an operation-relevant parameter, or to a preset overload height.

14. The harvester according to any of the preceding claims,
**characterized in that** the control unit (5) is configured to pivot the mulching unit (4) back from the raised position (S2) into the working position (S1) in a time-controlled or path-controlled manner.

15. The harvester according to any of the preceding claims,
**characterized in that** the harvesting device (1) has an actuator (45) that is intended to pivot the mulching unit (4) from the working position (S1) into the raised position (S2) and vice versa.

16. A method for operating a harvester according to any of the preceding claims, in which at least one speed and/or at least one torque of a processing tool (41) of a mulching unit (4) of the harvester (1) is measured, an overload occurring on the processing tool (41) is detected by a threshold value comparison, and the processing tool (41) is pivoted from the working position (S1) into a raised position (S2) when the overload occurs.

## Revendications

1. Récolteuse (1) comprenant un appareil de récolte (1) muni d'au moins une unité de mulching (4),
* l'appareil de récolte (1) a une installation de coupe (2) et/ou de transfert (3) pour récolter des produits en tiges, et
* l'unité de mulching (4) a un outil (41) entrainé en rotation autour d'un axe d'entrainement (42) pour travailler les chaumes qui restent sur le champ, l'installation de coupe (2) et/ou de transfert (3) étant installé en aval selon la direction du flux de matière (11) qui s'appuie sur le sol du champ en mode de fonctionnement sur le champ en position de travail (S1) et qui est monté pivotant par rapport à l'appareil de récolte (1) autour d'un axe de pivotement (S) du châssis (12),
- la machine de récolte comprenant une unité de commande (5) et au moins un capteur (6),
récolteuse **caractérisée en ce que**
le capteur (6) est prévu pour détecter une surcharge appliquée à l'outil (41) et à la détection de la surcharge l'unité de commande (5) est conçue pour basculer l'unité de mulching (4) pour la faire passer de la position de travail (S1) dans une position soulevée (S2).

2. Récolteuse selon la revendication 1,
**caractérisée en ce que**
le capteur (6) est prévu pour détecter la surcharge et un capteur de vitesse de rotation (61) ou un capteur de couple (62) équipe l'unité de mulching (4).

3. Récolteuse selon l'une des revendications précédentes,
**caractérisée en ce que**
l'unité de mulching (4) a une transmission (7) reliée côté entrée à la ligne d'entrainement (13) de l'appareil de récolte (1) et/ou de la récolteuse, et une sortie côté outil (71) pour entrainer l'outil (41),
* le capteur (6) étant installé pour détecter la surcharge de la transmission (7), et
* détecter à la sortie côté outil (71) de la transmission, la vitesse de rotation de l'outil (41), ou
* réalisée en forme de moyeu de mesure de couple et qui saisit le couple côté entrée de la transmission (7) ou à la sortie côté outil (71) de la transmission.

4. Récolteuse selon l'une des revendications précédentes,
**caractérisée en ce qu'**elle comporte
un ensemble d'unités de mulching (4), avec
* une transmission (7) pour chaque unité de mulching (4),
* chaque unité de mulching (4) ayant un capteur (6) pour détecter la surcharge.

5. Récolteuse selon l'une des revendications précédentes,
**caractérisée en ce que**
les transmissions (7) des unités de mulching (4) sont reliées par des arbres articulés (72).

6. Récolteuse selon l'une des revendications précédentes,
**caractérisée en ce que**
au moins deux unités de mulching (4) reliées à la même ligne d'entrainement (8), forment un groupe.

7. Récolteuse selon l'une des revendications précédentes,
**caractérisée en ce que**
l'appareil de récolte a au moins deux segments (13, 14),
- à chaque segment (13, 14) sont associées au moins deux unités de mulching (4) notamment du même groupe, et ces unités sont réparties régulièrement sur la largeur des segments (13, 14).

8. Récolteuse selon l'une des revendications précédentes,
**caractérisée en ce que**
à la détection de surcharge de l'unité de mulching (4), l'unité de commande (5), bascule cette unité de mulching (4) ou les unités de mulching (4) du segment (13, 14) de cette unité de mulching (4) ou les unités de mulching (4) du groupe, de cette unité de mulching (4), à partir de sa position active (S1) dans une position relevée (S2).

9. Récolteuse selon l'une des revendications précédentes,
**caractérisée en ce que**
la transmission (7) a un embrayage de surcharge (73) pour couper l'entrainement de la ligne d'entrainement (8) de l'appareil de récolte et/ou de la machine récolteuse par rapport à la sortie côté outil (71) de la transmission.

10. Récolteuse selon l'une des revendications précédentes,
**caractérisée en ce que**
l'unité de commande (5) détecte la surcharge si :
a) la vitesse de rotation détectée à l'instant de l'outil (41), ou
b) la différence des vitesses de rotation entre la vitesse de rotation la plus élevée des vitesses de rotation actuellement saisie d'au moins deux unités de mulching (4) notamment du même groupe et la vitesse de rotation la plus basse saisie actuellement, d'au moins deux unités de mulching (4) passet en-dessous d'un seuil, et/ou si
c) le couple actuel saisi de l'outil (41), ou
d) la différence de couple entre le couple le plus haut saisi actuellement d'au moins deux unités de mulching (4) notamment du même groupe et le couple le plus bas actuellement saisi d'au moins deux unités de mulching (4) dépassent un seuil, et/ou si
e) la différence entre la vitesse de rotation de fonctionnement de l'appareil de récolte (1) et/ou de la récolteuse et la vitesse de rotation actuellement saisie de l'unité de travail (41) est inférieure à un seuil, ou
f) la différence entre le couple d'entrainement de l'appareil de récolte (1) ou la récolteuse et le couple de l'outil (41) dépasse un seuil.

11. Récolteuse selon la revendication 1,
**caractérisée par** un capteur (6') pour saisir le flux de produits et l'unité de commande (5) est conçue pour basculer l'unité de mulching (4) à la saisie d'un flux de produit qui diminue ou disparait, basculé en position soulevée (S2) par rapport à la position de travail (S1).

12. Récolteuse selon la revendication 11,
**caractérisée en ce que**
pour saisir le flux de produits dans l'appareil de récolte (1) le capteur (6') est installé dans un dispositif d'entrée de la récolteuse ou dans la boucle d'éjection de la récolteuse.

13. Récolteuse selon l'une des revendications précédentes,
**caractérisée en ce que**
l'unité de commande (5) relève l'unité de mulching (4) lors du basculement dans la position relevée (S2) en fonction du niveau de la surcharge et/ou d'un paramètre concernant le fonctionnement, d'une hauteur déterminée ou pour une hauteur de surcharge préétablie.

14. Récolteuse selon l'une des revendications précédentes,
**caractérisée en ce que**
l'unité de commande (5) est conçue pour commander chronologiquement l'unité de mulching (4) ou la dégager à partir de la position soulevée (S2) en retour vers la position de travail (S1).

15. Récolteuse selon l'une des revendications précédentes,
**caractérisée en ce que**
l'appareil de récolte (1) comporte un actionneur (45) pour basculer l'unité de mulching (4) de la position de travail (S1) dans la position relevée (S2) et inversement.

16. Procédé de fonctionnement d'une machine récolteuse selon l'une des revendications précédentes,
selon lequel
- on mesure au moins une vitesse de rotation et/ou au moins le couple d'un outil (41) d'une unité de mulching (4) de la récolteuse (1),
- on détecte une surcharge appliquée à l'outil (41), par comparaison des valeurs de seuil, et
- on bascule l'outil (41) de la fonction de travail (S1) dans une position relevée (S2) lorsque se produit une surcharge.
